(19) Europäisches Patentamt
European Patent Office
Office européen des brevets

(11) Veröffentlichungsnummer: **0 121 837**
**A1**

# (12) EUROPÄISCHE PATENTANMELDUNG

(21) Anmeldenummer: **84103142.0**

(22) Anmeldetag: **22.03.84**

(51) Int. Cl.³: **C 09 D 3/48**, C 09 D 5/40, C 08 G 59/56

(30) Priorität: **30.03.83 DE 3311517**

(43) Veröffentlichungstag der Anmeldung: **17.10.84 Patentblatt 84/42**

(84) Benannte Vertragsstaaten: **AT BE CH DE FR GB IT LI NL SE**

(71) Anmelder: **BASF Farben + Fasern Aktiengesellschaft, Am Neumarkt 30, D-2000 Hamburg 70 (DE)**

(72) Erfinder: **Loch, Werner, Dr., In der Bleiche 2, D-6701 Erpolzheim (DE)**
Erfinder: **Schupp, Eberhard. Dr., Tilsiter Weg 4, D-6830 Schwetzingen (DE)**
Erfinder: **Osterloh, Rolf, Dr., Am Wehrhaus 16 a, D-6718 Gruenstadt (DE)**
Erfinder: **Ahlers, Klaas, Dr., Foehrenweg 21, D-4400 Muenster (DE)**

(74) Vertreter: **Welzel, Dr. Gunther et al, c/o BASF Aktiengesellschaft Carl-Bosch-Strasse 38, D-6700 Ludwigshafen (DE)**

## (54) In der Hitze selbstvernetzende Lackbindemittel, ihre Herstellung und Verwendung.

(57) Die Erfindung betrifft in der Hitze selbstvernetzende Lackbindemittel auf Basis von harzartigen Polyadditions-, Polykondensations- oder Polymerisationsprodukten. Diese weisen ein mittleres Molekulargewicht $M_n$ zwischen 500 und 10 000 auf und enthalten im Mittel pro Molekül mindestens zwei Gruppierungen der allgemeinen Formel

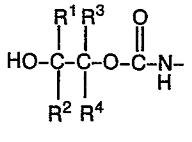

worin $R^1$, $R^2$, $R^3$ und $R^4$ untereinander gleich oder verschieden sind und für Wasserstoff, einen Methyl- oder einen Ethylrest stehen, sowie zusätzlich Hydroxyl- und/oder primäre und/oder sekundäre sowie gegebenenfalls tertiäre Aminogruppen.

Sie lassen sich durch Umsetzung entsprechender, primäre Aminogruppen enthaltender Harze mit cyclischen Kohlensäureestern herstellen und sowohl als organisch gelöste Einbrennlacke als auch zur Herstellung kathodisch abscheidbarer Elektrotauchlacke verwenden.

EP 0 121 837 A1

In der Hitze selbstvernetzende Lackbindemittel, ihre Herstellung und Verwendung

Die Erfindung betrifft in der Hitze selbstvernetzende Lackbindemittel, welche ohne Säurekatalyse und ohne Formaldehydabspaltung aushärten, Verfahren zu ihrer Herstellung sowie deren Verwendung.

Selbstvernetzende Lackbindemittel, bestehend aus Copolymerisaten verschiedener Monomerer, in der Regel (Meth)acrylsäureestern, die mehr oder weniger große Mengen veretherten Methylol(meth)acrylamids einpolymerisiert enthalten, sind bekannt. Ihre Wirksamkeit ist an das Vorhandensein von sauren Gruppen im Bindemittel oder zumindest an das Fehlen von basischen Gruppen gebunden, was nicht nur ihre Einsatzmöglichkeiten beschränkt, sondern durch die im Film verbleibende Säure auf metallischen Substraten auch zu Korrosion führen kann; außerdem wird bei der Vernetzungsreaktion stets Formaldehyd abgespalten, z.T. in erheblichen Mengen.

In der DE-PS 22 52 536 werden selbstvernetzende Bindemittel für die kathodische Elektrotauchlackierung beschrieben. Diese bestehen aus einem Polyurethanharz, das durch Umsetzung einer epoxygruppenhaltigen organischen Verbindung mit einem sekundären Amin und einem teilweise verkappten Polyisocyanat hergestellt worden ist. Als Verkappungsmittel werden primäre aliphatische Alkohole bevorzugt. Damit bei diesen Verkappungsmitteln eine ausreichende Vernetzung bei Temperaturen $<200°C$ erzielt wird, werden aromatische Polyisocyanate als Ausgangsmaterialien benötigt. Aromatische Polyisocyanate neigen jedoch bekanntermaßen stark zur Vergilbung. Dies ist für viele Anwendungszwecke zwar unbedeutend, doch können z.B. kathodisch abscheidbare Weißlacke, die ebenfalls von großem allgemeinem Interesse sind, auf diese Weise nicht erhalten werden.

Aufgabe der vorliegenden Erfindung war es, diese Nachteile zu beheben, d.h. in der Hitze selbstvernetzende Lackbindemittel bereitzustellen, die zu organisch gelösten Einbrennlacken führen, welche in Abwesenheit von Säure ohne Formaldehydabspaltung aushärten. Eine weitere Aufgabe der vorliegenden Erfindung bestand darin, in der Hitze selbstvernetzende Lackbindemittel aufzuzeigen, welche nach Neutralisation mit einer Säure wasserverdünnbar sind, sich auf einem als Kathode dienenden metallischen Substrat abscheiden lassen und bei Temperaturen $\ll 200°C$ zu vergilbungsfreien Filmen eingebrannt werden können.

Gegenstand der vorliegenden Erfindung sind in der Hitze selbstvernetzende Lackbindemittel auf Basis von harzartigen Polyadditions-, Polykondensa-

Ls/ro

tions- oder Polymerisationsprodukten, die dadurch gekennzeichnet sind, daß sie ein mittleres Molekulargewicht $\bar{M}_n$ zwischen 500 und 10.000 aufweisen und im Mittel pro Molekül mindestens zwei Gruppierungen der allgemeinen Formel (I)

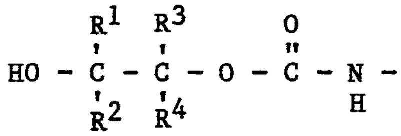

(I)

worin $R^1$, $R^2$, $R^3$ und $R^4$ untereinander gleich oder verschieden sind und für Wasserstoff, einen Methyl- oder einen Ethylrest stehen, sowie zusätzlich Hydroxyl- und/oder primäre und/oder sekundäre sowie gegebenenfalls tertiäre Aminogruppen enthalten.

Gegenstand der vorliegenden Erfindung ist auch ein Verfahren zur Herstellung derartiger Lackbindemittel, wobei entsprechende harzartige Vorprodukte, die anstelle der Gruppierungen der allgemeinen Formel (I) primäre Aminogruppen enthalten, d.h. harzartige Polyadditions-, Polykondensations- oder Polymerisationsprodukte, die mindestens zwei primäre Aminogruppen pro Molekül enthalten, mit 25 bis 200 Mol.%, bezogen auf alle vorhandenen primären Aminogruppen, mindestens eines cyclischen Kohlensäureesters der allgemeinen Formel (II)

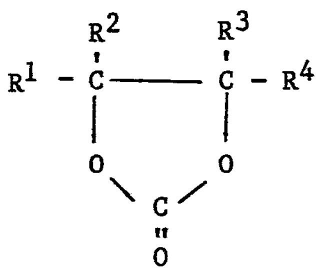

(II),

worin $R^1$, $R^2$, $R^3$ und $R^4$ die in Formel I angegebene Bedeutung haben, bei Temperaturen von 0 bis 80°C umgesetzt werden.

Als harzartiges Polyadditions-, Polykondensations- oder Polymerisationsprodukt mit mindestens zwei primären Aminogruppen pro Molekül kann dazu vorzugsweise z.B. ein Umsetzungsprodukt aus mindestens einem aromatischen oder aliphatischen Epoxidharz und mindestens einem Polyamin, das mindestens zwei primäre Aminogruppen pro Molekül enthält, oder einem Polyamin mit mindestens einer Aminogruppe, die in latenter Form als Ketimingruppe vorliegt, und einer zusätzlichen sekundären Aminogruppe.

Gegenstand der vorliegenden Erfindung sind außerdem derartige Lackbindemittel, die durch zumindest teilweise Neutralisation mit einer Säure wasserverdünnbar sind.

Gegenstand der vorliegenden Erfindung ist ferner die Verwendung der erfindungsgemäßen Lackbindemittel als Bestandteile organisch gelöster Einbrennlacke, sowie zur Herstellung kathodisch abscheidbarer Elektrotauchlacke.

Zu den Lackbindemitteln ist im einzelnen folgendes zu sagen:

Die harzartigen Vorprodukte zur Herstellung der erfindungsgemäßen Lackbindemittel können aus den verschiedensten Verbindungsklassen ausgewählt werden; Wichtig ist, daß sie im Mittel mindestens zwei primäre Aminogruppen pro Molekül und zusätzlich Hydroxygruppen und/oder sekundäre sowie gegebenenfalls tertiäre Aminogruppen enthalten.

Beispiele geeigneter Materialien sind primäre Aminogruppen enthaltende Polyether, Copolymere aus α,ß-ethylenisch ungesättigten Verbindungen, deren primäre Aminogruppen durch polymeranaloge Umsetzung eingeführt worden sind, Polyurethanharnstoffe mit primären Aminogruppen und Epoxid/Amin-Addukte.

Geeignete Polyether sind z.B. aliphatische oder araliphatische Polyether, welche durch Umsetzung von zwei und/oder mehrwertigen Alkoholen mit verschiedenen Mengen an Ethylen- und/oder Propylenoxid und anschließendem Austausch eines Teils der OH-Gruppen durch Ammoniak unter Bildung primärer Aminogruppen erhalten werden.

Beispiele für Copolymerisate, deren primäre Aminogruppen durch polymeranaloge Umsetzungen eingeführt worden sind, sind:

a) Hydrierungsprodukte von Copolymeren aus 40 bis 70 Gew.% Vinylaromaten, wie beispielsweise Styrol oder Vinyltoluol, 10 bis 55 Gew.% (Meth)acrylnitril und/ oder (Meth)acrylamid sowie 5 bis 20 Gew.% Estern α,ß-ethylenisch ungesättigter Carbonsäuren, wie beispielsweise Ester der Acrylsäure, Methacrylsäure, Maleinsäure, Fumarsäure oder Itaconsäure mit 1 bis 18 C-Atome enthaltenden Alkoholen, wobei OH-gruppenhaltige Ester, wie beispielsweise Hydroxyethyl- oder Hydroxypropyl(meth)acrylat, bevorzugt sind.

b) Verseifungsprodukte von Copolymeren aus 40 bis 70 Gew.% Vinylaromaten, wie beispielsweise Styrol oder Vinyltoluol, 10 bis 55 Gew.% N-Vinylamiden von Monocarbonsäuren, wie beispielsweise N-Vinylformamid und 5 bis 20 Gew.% Vinylestern von 2 bis 18 C-Atome enthaltenden Monocarbonsäuren, wobei Vinylacetat bevorzugt ist.

Geeignete Polyurethanharnstoffe, die im Mittel mehr als 2 pimäre Aminogruppen pro Molekül enthalten, können z.B. aus aliphatischen und/oder aromatischen Diisocyanaten, wie beispielsweise Tetramethylendiisocyanat, Hexamethylendiisocyanat, Isophorondiisocyanat, Diphenylmethandiisocyanat, Toluylendiisocyanat, Naphthylendiisocyanat, 4,4'-Diphenyletherdiisocyanat, sowie gegebenenfalls daraus hervorgehenden Di- oder Trimeren, und aliphatischen Diolen, wie Ethylenglykol, Diethylenglykol, Triethylenglykol, Polyethylenglykolen, Propandiol, Butandiol, Hexandiol, Neopentylglykol oder Hydroxypivalinsäureneopentylglykolester, und gegebenenfalls höherwertigen Alkoholen, wie Trimethylolpropan, Glycerin, Pentaerythrit, Trimethylolbenzol oder Trishydroxyethylisocyanurat, im Gemisch mit aliphatischen Diaminen, wie beispielsweise Ethylendiamin, Propylendiamin, 1,4--Butandiamin, 1,5-Pentandiamin, Neopentandiamin, Hexamethylendiamin, Diaminocyclohexan, Diaminodicyclohexylmethan, 3,3'-Dimethyl-4,4'-diamino-dicyclohexylmethan, 4,9-Dioxadodecan-1,12-diamin und gegebenenfalls höherwertigen Aminen, beispielsweise Trisaminoethyl-amin oder 1,1,1-Trisaminopropoxymethyl-propan erhalten werden.

Die besonders bevorzugten harzartigen Vorprodukte die im Mittel mindestens 2 primäre Aminogruppen pro Molekül enthalten, sind Epoxid/Amin--Addukte, die durch Umsetzung von Epoxidharzen mit primären oder sekundären Aminen erhalten werden.

Geeignete Epoxidharze sind z.B. Polyglycidylether von Polyphenolen, wie beispielsweise 2,2-Bis-(4-hydroxyphenyl)-propan, 1,1-Bis-(4-hydroxyphenyl)-ethan, Bis-(4-hydroxyphenyl)-methan, Bis-(2-hydroxynaphthyl)--methan und dgl., die durch Veretherung der genannten Polyphenole mit Epichlorhydrin in Gegenwart von Alkali hergestellt werden können, Polyglycidylether von mehrwertigen Alkoholen, die durch entsprechende Umsetzung von Epichlorhydrin mit mehrwertigen Alkoholen, wie Ethylenglykol, Diethylenglykol, Triethylenglykol, 1,2-Propylenglykol, 1,3-Propandiol, 1,5-Pentandiol, 2,2-Bis-(4-hydroxycyclohexyl)-propan, Glycerin, Trimethylolpropan, Pentaerythrit und dgl. erhalten werden können, N,N'-Diglycidyl-Derivate von N-Heterocyclen und Triglycidylisocyanurat.

Aus Elastizitätsgründen kann es von Vorteil sein, die genannten Epoxidharze vor der Umsetzung mit Aminen mit geringeren als äquivalenten Mengen

an langkettigen polyfunktionellen Alkoholen oder Mercaptanen zu modifizieren.

Während die Umsetzung der Mercaptane mit Epoxidgruppen bereits ohne Katalysator abläuft, sind für die Umsetzung der Alkohole die Verwendung eines Katalysators, wie z.B. Dimethylbenzylamin, und höhere Temperaturen (50 bis 150°C) notwendig.

Auch eine Elastifizierung durch langkettige Di-sek.Amine, wie beispielsweise Dimerfettsäure-bis-[2-(2-hydroxyethylamino)-ethyl]-amid, die ebenfalls in geringeren als äquivalenten Mengen eingesetzt werden, ist möglich. In diesem Falle können Elastifizierung und Aminumsetzung synchron durchgeführt werden.

Eine Möglichkeit, um zu Epoxid/Amin-Addukten, die im Mittel mindestens zwei primäre Aminogruppen pro Molekül enthalten, zu gelangen, besteht in der Umsetzung von überschüssigen primären Diaminen mit obengenannten Epoxidharzen und der anschließenden Abtrennung des überschüssigen Amins bei erhöhter Temperatur und vermindertem Druck.

Als Diamine kommen dafür vor allem solche mit zwei bis sechs Kohlenstoffatomen in Betracht, z.B. Ethylendiamin, 1,2- und 1,3-Diaminopropan, 1,4-Diaminobutan, Neopentandiamin und Hexamethylendiamin. Die Reaktionsprodukte können, falls keine vorherige Elastifizierung erfolgt ist, mit Dicarbonsäuren kettenverlängert werden, z.B. mit Sebacinsäure oder dimerer Fettsäure. Durch das Verhältnis Dicarbonsäure zu Epoxid/Amin-Addukt kann man das gewünschte Molekulargewicht einstellen, z.B. kann man auf zwei Moleküle Epoxid/Amin-Addukt 1 mol dimerer Fettsäure einsetzen.

Eine weitere Möglichkeit, für das erfindungsgemäße Verfahren geeignete Produkte mit primären Aminogruppen herzustellen, ist der Umsatz von Epoxidharzen mit sekundären Aminen, die geblockte primäre Aminogruppen enthalten. Beispiele für solche Amine sind das Diketimin von Diethylentriamin, das Ketimin von Aminoethylethanolamin, das Ketimin von N-Aminoethyl-piperazin und das Ketimin von N-Methyl-ethylendiamin. Die Ketimine lassen sich in einfacher Weise aus den freien Aminen und einem Keton, z.B. Methylisobutylketon, unter Auskreisen von Wasser herstellen. Bei der Umsetzung mit Epoxidharzen reagiert nur die sekundäre Aminogruppe; anschließend kann das Ketimin durch einfache Zugabe von Wasser gespalten werden, wobei sich die freie primäre Aminogruppe zurückbildet. Durch Umsetzung eines Teils der primären Aminogruppen mit Dicarbonsäuren lassen sich auch diese Produkte durch Kettenverlängerung elastifizieren.

Die Herstellung der erfindungsgemäßen Lackbindemittel erfolgt im allgemeinen durch Umsetzung der mindestens zwei primäre Aminogruppen pro Molekül enthaltenden harzartigen Vorprodukte mit 25 bis 200, vorzugsweise 50 bis 125 Mol.%, bezogen auf alle vorhandenen primären Aminogruppen, mindestens eines cyclischen Kohlensäureesters der allgemeinen Formel (II),

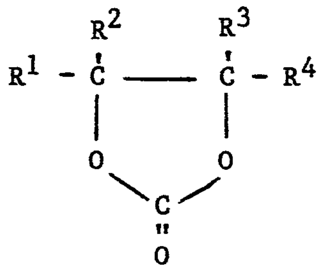

(II),

worin $R^1$, $R^2$, $R^3$ und $R^4$ für Wasserstoff, einen Methyl- oder einen Ethylrest stehen.

Geeignete cyclische Kohlensäureester sind beispielsweise Ethylencarbonat, Propylencarbonat, Isobutylencarbonat, Butylencarbonat und dgl.. Sie sind in einfacher Weise aus den entsprechenden Epoxiden durch Umsetzung mit Kohlendioxid erhältlich.

Die Umsetzung der harzartigen, primären Aminogruppen enthaltenden Produkte (= Polyadditions-, Polykondensations- oder Polymerisationsprodukte mit mindestens zwei primären Aminogruppen pro Molekül) mit den cyclischen Kohlensäureestern erfolgt entweder in Substanz oder in geeigneten Lösemitteln, wie beispielsweise Wasser, Alkoholen, Ethern, Estern, Ketonen, Halogenkohlenwasserstoffen, aromatischen Kohlenwasserstoffen und aliphatischen Kohlenwasserstoffen bzw. Gemischen dieser Lösemittel. Die Reaktionspartner sollen in diesem Falle in den verwendeten Lösemitteln oder Lösemittelgemischen zumindest größtenteils löslich sein und letztere sollen weder primäre oder sekundäre Aminogruppen noch Mercaptogruppen enthalten, welche auch mit den cyclischen Kohlensäureestern reagieren können. Die bevorzugten Lösemittel sind Wasser, Alkohole und Etheralkohole, wie z.B. Methanol, Ethanol, Propanole, Butanole und Monoether von Diolen, wie beispielsweise Ethylenglykol, Diethylenglykol, Propylenglykol oder Dipropylenglykol, mit den zuerst genannten Monoalkanolen.

Die Umsetzung der primäre Aminogruppen enthaltenden Harze mit den cyclischen Kohlensäureestern erfolgt bei Temperaturen von 0 bis 80°C, vorzugsweise 15 bis 40°C. In einer besonders bevorzugten Ausführungsform des erfindungsgemäßen Verfahrens werden die Reaktionspartner bei Raumtemperatur gemischt und stehengelassen, bis die erforderliche Aminzahlabnahme erfolgt ist. Die Reaktionszeiten liegen dabei im allgemeinen zwischen einer Stunde und 48 Stunden. Die erfindungsgemäßen Lackbindemittel weisen mittlere Molekulargewichte $\bar{M}_n$ zwischen 500 und 10.000 auf und enthalten pro Molekül im Mittel mindestens zwei Gruppierungen der Formel (I) sowie zusätzlich Hydroxylgruppen und/oder weitere primäre und/oder sekundäre sowie gegebenenfalls tertiäre Aminogruppen. Sie können zusammen mit löslichen Farbstoffen, Füllstoffen, Pigmenten oder dgl. nach üblichen Methoden zu organisch gelösten Überzugsmitteln verarbeitet werden. Diese können zusätzliche in der Lacktechnologie übliche Zusatzstoffe, wie Verlaufmittel, Entschäumer, Netzmittel, Härtungskatalysatoren sowie in untergeordneten Mengen zusätzliche Vernetzer und weitere Bindemittel enthalten.

Ihre Verarbeitung kann nach üblichen Methoden, wie durch Streichen, Rakeln, Spritzen, Walzen, Gießen oder Drucken erfolgen. Bevorzugt ist die Verarbeitung durch Lackspritzen nach verschiedenen üblichen Ausführungsformen, sei es mit Luftdruckspritzpistolen oder auf einer Elektrostatikanlage. Die erfindungsgemäßen Lackbindemittel bzw. die daraus hergestellten Überzugsmittel eignen sich zum Überziehen von Substraten verschiedenster Art, z.B. von Metall, Glas, Keramik und dgl.. Das bevorzugte Substrat ist Metall.

Nach der Applikation auf das zu lackierende Substrat werden die Naßfilme gegebenenfalls kurz abgelüftet und anschließend bei Temperaturen von 130 bis 200°C, vorzugsweise 150 bis 180°C eingebrannt. Die Einbrennzeiten betragen im allgemeinen 20 bis 30 Minuten. Zur Beschleunigung der Härtung ist die Mitverwendung von Härtungskatalysatoren von Vorteil.

Als Härtungskatalysatoren sind Zinnverbindungen, wie beispielsweise Dibutylzinndilaurat, Dibutylzinnoxid, Zinnacetat und dgl., bevorzugt. Geeignet sind auch Bleiverbindungen, wie beispielsweise Bleinaphthenat, Bleioctoat oder Bleiacetat. Die Zusätze erfolgen in Mengen von 0,5 bis 4 Gew.%, vorzugsweise 1 bis 2,5 Gew.%, bezogen auf das Lackbindemittel.

Werden als harzartige Vorstufe zur Herstellung der erfindungsgemäßen Lackbindemittel die bevorzugten Epoxid/Amin-Addukte eingesetzt, verfügen die Harze auch nach der Umsetzung mit dem cyclischen Kohlensäureester noch über eine ausreichende Anzahl basischer Stickstoff-Funktionen, so daß sie nach Protonierung mit Säuren wasserlöslich oder wasserdispergierbar sind. Sie lassen sich somit in einer besonders bevorzugten Ausführungsform der vorliegenden Erfindung als Bindemittel für kathodisch abscheidbare Elektrotauchlacke einsetzen.

Die Herstellung der Elektrotauchlacke erfolgt nach üblichen Methoden. Als Neutralisationsmittel werden organische oder anorganische Säuren, wie beispielsweise Ameisensäure, Essigsäure, Milchsäure oder Phosphorsäure, verwendet, wobei Carbonsäuren bevorzugt sind. Ihre Mengen sind so bemessen, daß Bad-pH-Werte von 6,5 bis 8,0, vorzugsweise 7,0 bis 7,5, resultieren, damit eine Korrosion der Anlagen vermieden wird. Die Elektrotauchbäder können außerdem weitere übliche Zusatzstoffe, wie Pigmente, Füllstoffe, Verlaufmittel, Netzmittel, oberflächenaktive Mittel sowie in untergeordneten Mengen zusätzliche andere Lackbindemittel und/oder Vernetzer enthalten.

Auch bei dieser Anwendung der erfindungsgemäßen Lackbindemittel ist in der Regel der Einsatz von Härtungskatalysatoren von Vorteil, deren Art und Menge bereits bei der Verwendung als konventionelle Lackbindemittel erwähnt wurden.

Die erfindungsgemäßen Lackbindemittel lassen sich für kathodisches Elektrotauchlackieren von beliebigen elektrisch-leitenden Substraten, wie beispielsweise Eisen, Aluminium, Kupfer und dgl., die gegebenenfalls chemisch vorbehandelt, z.B. phosphatiert sein können, verwenden.

Die Abscheidespannungen betragen 50 bis 500 V, vorzugsweise 150 bis 350 V. Für die Härtung der abgeschiedenen Überzüge sind Einbrennbedingungen erforderlich, wie sie bereits bei der Beschreibung der konventionellen Systeme beschrieben wurden.

Die folgenden Beispiele sollen den Gegenstand der vorliegenden Erfindung näher erläutern, ohne diesen einzuschränken. Die angegebenen Teile und Prozente beziehen sich, soweit nicht anders angegeben, auf das Gewicht.

<u>Beispiel 1</u>

a) Herstellung eines elastifizierten Epoxidharzes

1455 Teile eines handelsüblichen Polyglycidylethers von 2,2-Bis-(4-hydroxyphenyl)-propan mit einem Epoxidäquivalentgewicht von 485 werden mit 412,5 Teilen eines handelsüblichen Polycaprolactondiols mit einem OH-Äquivalentgewicht von 275 in Gegenwart von 120 Teilen Xylol und 4,5 Teilen Dimethylbenzylamin ca. 2 Stunden bei 130°C umgesetzt. Das Epoxidäquivalentgewicht beträgt dann 1070. Das Harz wird mit 504 Teilen Isobutanol auf 75 % Festkörper verdünnt und sofort, wie unter 1c) beschrieben, weiterverarbeitet.

b) Herstellung eines Ketimins aus Methylisobutylketon und N-Aminoethyl--piperazin

387 Teile N-Aminoethylpiperazin und 511 Teile Methylisobutylketon werden gemeinsam erhitzt. In einem Temperaturbereich von 113 bis 147°C werden binnen 3 1/2 Stunden 54 Teile Wasser ausgekreist. Auf diese Weise wird eine ca. 75 %ige Lösung des gewünschten Ketimins in Methylisobutylketon erhalten.

c) Herstellung eines Epoxid/Amin-Addukts mit prim. Aminogruppen

Zu 2480 Teilen des elastifizierten Epoxidharzes nach Beispiel 1a) (75 %ige Lösung) werden 489 Teile Ketimin aus Beispiel 1b) (75 %ige Lösung) gegeben und die Mischung 2 Stunden auf 100°C erwärmt. Der Epoxidwert ist dann auf 0 gefallen. Anschließend werden zwecks Hydrolyse des Ketimins 40 Teile Wasser hinzugefügt. Mit Isobutanol wird auf ca. 65 % Festgehalt verdünnt und das Produkt über Nacht stehengelassen.

d) Herstellung des Lackbindemittels

470 Teile des Epoxid/Amin-Addukts nach Beispiel 1c) werden mit einer Lösung von 21 Teilen Ethylencarbonat in 16 Teilen Isobutanol 90 Minuten bei Raumtemperatur und 5 1/2 Stunden bei 40°C gerührt.

e) Herstellung eines organisch gelösten Weißlacks

In einer Mischung aus 154 Teilen des Lackbindemittels aus Beispiel 1d), 53 Teilen Ethylenglykolmonoethylether und 50 Teilen Ethylenglykolmonobutylether werden nach Zugabe von 2 Teilen Dibutylzinndilaurat 90 Teile Titandioxid angeteigt und in einer Sandmühle bis zu einer Körnigkeit nach DIN 53 203 von $< 10$ µm vermahlen. Nach Abtrennung der Mahlkörper resultiert ein ca. 65 %iger Weißlack. Dieser wird auf Stahlbleche gerakelt (Naßfilmdicke 100 µm) und 20 Minuten bei 160°C eingebrannt. Man erhält einen weißen hochglänzenden, harten und elastischen Lackfilm, der gegen Methylisobutylketon (50maliges Hin- und Herreiben mit einem mit Methylisobutylketon getränkten Wattebausch) resistent ist.

Beispiel 2

a) Herstellung eines Epoxid/Amin-Addukts mit primären Aminogruppen

400 Teile Hexamethylendiamin werden auf 80°C erwärmt. Anschließend wird eine 80 %ige Lösung von 400 Teilen eines handelsüblichen Polyglycidylethers von 2,2-Bis-(4-hydroxyphenyl)-propan mit einem Epoxidäquivalentgewicht von 485 in Toluol hinzugefügt. Nach anfänglicher exothermer Reaktion läßt man 30 Minuten bei 100°C ausreagieren. Dann werden überschüssiges Hexamethylendiamin und Toluol destillativ entfernt, wobei eine Innentemperatur von 180°C erreicht wird. Das erhaltene Epoxid/Amin-Addukt weist eine Aminzahl von 181 mg KOH/g auf.

b) Herstellung des Lackbindemittels

250 Teile Epoxid/Amin-Addukt aus Beispiel 2a) werden in 107 Teilen Ethylenglykolmonoethylether gelöst. Anschließend wird eine Lösung von 35,5 Teilen Ethylencarbonat in 15,2 Teilen Ethylenglykolmonoethylether hinzugefügt und noch 1 Stunde bei 40°C gerührt; die Aminzahl liegt dann bei 87 mg KOH/g. Zum Schluß werden 7 Teile Hexylglykol zugesetzt.

c) Herstellung eines kathodischen Elektrotauchlacks

Aus 145 Teilen des Lackbindemittels aus Beispiel 2b), 2 Teilen Dibutylzinndilaurat, 3,7 Teilen Eisessig und Wasser werden 1000 Teile einer 10 %igen wäßrigen Dispersion hergestellt. Hierzu werden unter Rühren 66 Teile einer Pigmentpaste zugesetzt, die, wie im folgenden beschrieben, hergestellt wird:

Pigmentpaste:

Nach Beispiel 1a) der DE-OS 31 21 765 wird ein Pastenbindemittel hergestellt. Dazu werden in einem Reaktionsgefäß 200 Teile Ethylenglykolmonobutylether auf 90°C erwärmt. Dann wird binnen 2 Stunden eine Mischung aus 396 Teilen N-Vinylpyrrolidon, 204 Teilen Vinylpropionat und 1,2 Teilen Azobisisobutyronitril zugetropft. Anschließend wird 1 Stunde bei 90°C nachpolymerisiert. Das resultierende Lösungspolymerisat hat einen K-Wert nach Fikentscher von 24. Der Festkörpergehalt der Copolymerisatlösung beträgt 76 %.

In einer Rührwerksmühle werden 250 Teile der obigen Copolymerisatlösung, 210 Teile Ethylenglykolmonobutylether, 555 Teile Ethylenglykolmonoethylether, 837 Teile Wasser, 1084 Teile Kaolin, 217 Teile basisches Bleisilikat, 145 Teile Ruß, 36 Teile Rutil und 3000 Teile Glasperlen von einem Durchmesser von 2 mm 45 Minuten bei einer Drehzahl von 1000 Umdrehungen/Minute gerührt. Nach dem Abtrennen der Glasperlen wird eine Schwarzpaste mit einem Festgehalt von 50,6 % erhalten.

Der erhaltene Elektrotauchlack weist einen pH-Wert von 7,8 auf. Er wird 24 Stunden bei 30°C gerührt und anschließend bei einer Abscheidespannung

von 150 V jeweils 2 Minuten auf zinkphosphatierten als Kathode geschalteten Stahlblechen abgeschieden. Die mit Wasser gespülten und mit Luft trocken geblasenen Naßfilme werden 20 Minuten bei 160°C eingebrannt.

Eigenschaften

| | |
|---|---|
| Schichtdicke | 15 µm |
| Schlagtiefung | 160 in x lb |
| Beständigkeit gegen Methylisobutylketon (nach 50 maligem Hin- und Herreiben mit einem mit Methylisobutylketon getränkten Wattebausch) | kein Angriff |
| 480 Stunden Salzsprühtest nach ASTM (Unterwanderung am Ritz) | 0,5 mm |

Beispiel 3

a) Herstellung eines Epoxid/Amin-Addukts mit primären Aminogruppen

Die Aminzahl des Epoxid/Amin-Addukts nach Beispiel 2a) wird durch Entfernung von Restspuren Hexamethylendiamin bei 180°C und 0,25 mbar in einem Dünnschicht-Verdampfer auf den Wert 169 mg KOH/g erniedrigt. 1045 Teile des so erhaltenen Materials werden mit 157 Teilen Dimerfettsäure in 97 Teilen Xylol bei 170 bis 195°C unter Entfernung von Wasser umgesetzt. Nach Beendigung der Wasserabspaltung wird das entstandene Harz mit 49 Teilen Ethylenglykolmonobutylether und 365 Teilen Isobutanol verdünnt.

b) Herstellung des Lackbindemittels

263 Teile des Epoxid/Amin-Addukts nach Beispiel 3a) werden mit einer Lösung von 18 Teilen Ethylencarbonat in 18 Teilen Ethanol gemischt und über Nacht stehengelassen. Die Aminzahl des erhaltenen Bindemittels liegt dann bei 75 mg KOH/g.

c) Herstellung eines kathodischen Elektrotauchlacks

Aus 148 Teilen des Lackbindemittels aus Beispiel 3b), 2 Teilen Dibutylzinndilaurat, 6,3 Teilen Milchsäure und Wasser werden 1000 Teile einer 10 %igen wäßrigen Dispersion hergestellt.

Hierzu werden unter Rühren 66 Teile einer Pigmentpaste zugesetzt, die, wie im folgenden beschrieben, hergestellt wird:

Pigmentpaste

In einer Rührwerksmühle werden 273 Teile Epoxid/Amin-Addukt nach Beispiel 2a), 15 Teile Milchsäure, 86 Teile Ethylenglykolmonobutylether, 325 Teile Titandioxid, 50 Teile Kaolin, 21 Teile basisches Bleisilikat, 5,5 Teile Ruß und 423 Teile Wasser mit 1200 Teilen Glasperlen (Durchmesser 2 mm) vermahlen, bis eine Körnigkeit nach DIN 53 203 von 10 µm erreicht ist. Nach Abtrennung der Glasperlen wird eine Graupaste mit einem Festgehalt von 50,5 % erhalten.

Der erhaltene Elektrotauchlack weist einen pH-Wert von 6,8 auf. Es wird bei 30°C 7 Tage gealtert und mit einer Abscheidespannung von 330 V jeweils 2 Minuten auf zinkphosphatierten Stahlblechen kathodisch abgeschieden. Die mit Wasser gespülten und mit Luft trocken geblasenen Naßfilme werden 20 Minuten bei 160°C eingebrannt.

Eigenschaften

| | |
|---|---|
| Schichtdicke | 17 µm |
| Schlagtiefung | 160 in x lb |
| Beständigkeit gegen Methylisobutylketon (nach 50maligem Hin- und Herreiben mit einem mit Methylisobutylketon getränkten Wattebausch) | kein Angriff |
| 480 Stunden Salzsprühtest nach ASTM (Unterwanderung am Ritz) | 0,3 mm |

Beispiel 4

Herstellung eines kathodisch abscheidbaren Weißlacks

Wie in Beispiel 3c) beschrieben, wird eine etwa 30 %ige wäßrige Dispersion aus dem Lackbindemittel gemäß Beispiel 3b) hergestellt. Bezogen auf den nichtflüchtigen Anteil werden 60 Gew.% Titandioxid hinzugefügt und das Ganze mit Hilfe von Porzellankugeln über Nacht auf dem Rollstuhl vermahlen. Nach Abtrennung der Mahlkörper wird auf 16 % Badfestkörper mit Wasser verdünnt.

Der Weißlack wird, wie im Beispiel 3c) beschrieben, abgeschieden und eingebrannt. Es werden praktisch vergilbungsfreie Beschichtungen mit guter Lösemittelbeständigkeit erhalten. Der Glanz liegt bei 72 % in der 60° Geometrie.

Patentansprüche

1. In der Hitze selbstvernetzende Lackbindemittel auf Basis von harzartigen Polyadditions-, Polykondensations- oder Polymerisationsprodukten, dadurch gekennzeichnet, daß sie ein mittleres Molekulargewicht $\bar{M}_n$ zwischen 500 und 10.000 aufweisen und im Mittel pro Molekül mindestens zwei Gruppierungen der allgemeinen Formel (I)

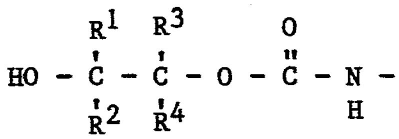

(I)

worin $R^1$, $R^2$, $R^3$ und $R^4$ untereinander gleich oder verschieden sind und für Wasserstoff, einen Methyl- oder einen Ethylrest stehen, sowie zusätzlich Hydroxyl- und/oder primäre und/oder sekundäre sowie gegebenenfalls tertiäre Aminogruppen enthalten.

2. Verfahren zur Herstellung von Lackbindemitteln nach Anspruch 1, dadurch gekennzeichnet, daß harzartige Polyadditions-, Polykondensations- oder Polymerisationsprodukte, die mindestens zwei primäre Aminogruppen pro Molekül enthalten, mit 25 bis 200 Mol.%, bezogen auf alle vorhandenen primären Aminogruppen, mindestens eines cyclischen Kohlensäureesters der allgemeinen Formel (II)

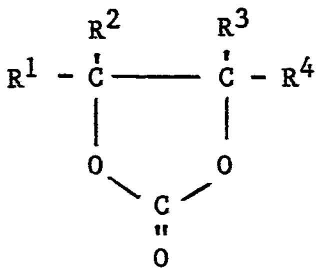

(II),

worin $R^1$, $R^2$, $R^3$ und $R^4$ die in Formel (I) angegebene Bedeutung haben, bei Temperaturen von 0 bis 80°C umgesetzt werden.

3. Verfahren nach Anspruch 2, dadurch gekennzeichnet, daß als harzartiges Polyadditions-, Polykondensations- oder Polymerisationsprodukt mit mindestens zwei primären Aminogruppen pro Molekül ein Umsetzungsprodukt aus mindestens einem aromatischen oder aliphatischen Epoxidharz und mindestens einem Polyamin, das mindestens zwei primäre Aminogruppen pro Molekül enthält, verwendet wird.

4. Verfahren nach Anspruch 2, dadurch gekennzeichnet, daß als harzartiges Polyadditions-, Polykondensations- oder Polymerisationsprodukt mit mindestens zwei primären Aminogruppen pro Molekül ein Umsetzungsprodukt aus mindestens einem aromatischen oder aliphatischen Epoxidharz und einem Polyamin mit mindestens einer in Form einer Ketimingruppe vorliegenden latenten primären Aminogruppe, das zusätzlich mindestens eine sekundäre Aminogruppe enthält, verwendet wird.

5. Lackbindemittel nach Anspruch 1, dadurch gekennzeichnet, daß sie durch zumindest teilweise Neutralisation mit einer Säure wasserverdünnbar sind.

6. Verwendung der Lackbindemittel nach Anspruch 1 als Bestandteil organisch gelöster Einbrennlacke.

7. Verwendung der Lackbindemittel nach Anspruch 1 oder 5 zur Herstellung kathodisch abscheidbarer Elektrotauchlacke.

8. Verwendung nach einem der Ansprüche 6 oder 7, dadurch gekennzeichnet, daß geringe Mengen mindestens eines Katalysators mitverwendet werden.

Europäisches Patentamt

**EUROPÄISCHER RECHERCHENBERICHT**

0121837

Nummer der Anmeldung

EP 84 10 3142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-4 122 069 (LEE G. MEYER)<br>* Ansprüche 1-17 *<br>----- | 1 | C 09 D 3/48<br>C 09 D 5/40<br>C 08 G 59/56 |
| | | | **RECHERCHIERTE SACHGEBIETE (Int. Cl. ³)** |
| | | | C 09 D<br>C 08 G |

Der vorliegende Recherchenbericht wurde für alle Patentansprüche erstellt.

| Recherchenort | Abschlußdatum der Recherche | Prüfer |
|---|---|---|
| DEN HAAG | 10-07-1984 | DECOCKER L. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82